# DEMANDE DE BREVET EUROPEEN

(11) **EP 4 095 852 A1**
(43) Date de publication de la demande: **30.11.2022**
(21) Numéro de dépôt: 22175029.2
(22) Date de dépôt: 24.05.2022
(51) Int. Cl.: G10L 15/22, B64C 13/10, B64D 43/00, G10L 15/00

(54) **DISPOSITIF ÉLECTRONIQUE DE COMMANDE D'UN SYSTÈME AVIONIQUE POUR LA MISE EN OEUVRE D'UNE FONCTION CRITIQUE AVIONIQUE, PROCÉDÉ ET PROGRAMME D ORDINATEUR ASSOCIÉS**

(30) Priorité: 25.05.2021 FR 2105401
(71) Demandeur: THALES, 92400 Courbevoie (FR)
(72) Inventeur: DE GRANCEY, Florence, 31036 TOULOUSE (FR); BOUSSIRON, Sébastien, 33701 MERIGNAC (FR)
(74) Mandataire: Lavoix

(57) **Abrégé**

L'invention concerne un dispositif électronique de commande (24) d'un système avionique pour la mise en œuvre d'une fonction critique avionique, comprenant :
- un module de réception d'un signal vocal d'instruction ;
- un module de reconnaissance vocale configuré pour transformer le signal vocal en une retranscription textuelle;
- un module de traitement configuré pour associer la retranscription textuelle à au moins une action à réaliser;
- un dispositif de surveillance comportant :
+ un module de contrôle configuré pour vérifier si la retranscription textuelle et/ou l'action à réaliser est cohérente si et seulement si :
a) la retranscription textuelle et/ou l'action à réaliser est cohérente avec la syntaxe attendue,
b) la retranscription textuelle et/ou l'action à réaliser est cohérente avec le champ lexical attendu, et
c) la retranscription textuelle et/ou l'action à réaliser est cohérente avec le contexte courant,

+ un module de génération d'une commande associée seulement si aucune incohérence n'est détectée.

## Description

La présente invention concerne un dispositif électronique de commande d'un système avionique pour la mise en œuvre d'une fonction critique avionique.

L'invention concerne également un procédé de commande d'un système avionique pour la mise en œuvre d'une fonction critique avionique.

L'invention concerne également un programme d'ordinateur comportant des instructions logicielles qui, lorsqu'elles sont exécutées par un ordinateur, mettent en œuvre un tel procédé.

Le système avionique est notamment embarqué dans un aéronef ou dans un poste de commande à distance d'un aéronef ou encore dans un poste de contrôle de l'aéronef.

L'invention concerne la mise en œuvre de fonctions critiques avioniques, c'est-à-dire qui sont critiques pour la sécurité de l'aéronef associé, des opérateurs, des passagers et/ou de l'environnement de l'aéronef.

Les commandes de vol ou de communication avec l'extérieure de l'aéronef sont des exemples de telles fonctions critiques.

En particulier, dans le domaine avionique, une fonction critique est par exemple définie par la norme ARP-4754A (*Aerospace Recommended Practice* en anglais).

Par mise en œuvre d'une fonction critique, on entend la réalisation d'un ou plusieurs calculs permettant de générer au moins une donnée de sortie associée à cette fonction critique, à partir d'au moins une donnée d'entrée.

L'invention concerne en particulier l'assistance à un opérateur du système avionique critique permettant de faciliter l'interfaçage et la communication entre ledit système avionique et l'opérateur via des commandes vocales de l'opérateur à destination du système avionique.

On connait des systèmes d'assistance par commande vocale pour des applications domestiques, des services d'assistance d'équipements intelligents notamment pour smartphone ou des systèmes d'assistance automobile pour la gestion des appels par exemple. Ces systèmes sont basés notamment sur des algorithmes de type intelligence artificielle permettant d'obtenir des niveaux de performance intéressants avec néanmoins un taux d'erreur de 5 à 10%.

En outre, ces algorithmes possèdent de nombreuses vulnérabilités comme par exemple les exemples dits adversaires pour les algorithmes de type réseau de neurones, des problèmes de garanties lorsque que l'entrée courante du système n'est pas dans la base de données d'apprentissage pour tous les composants basés sur l'apprentissage automatique ou encore des limites de modélisation ou de définition du vocabulaire pour les moteurs sémantiques. Ces différentes vulnérabilités peuvent conduire à des erreurs dans le traitement de la commande vocale. Dans les exemples cités ci-dessus, une erreur de traitement de la commande vocale présente un impact non critique comme par exemple l'appel d'une mauvaise personne.

Toutefois, dans le cadre de l'assistance auprès de systèmes avioniques mettant en oeuvre une fonction critique avionique, l'envoi d'une commande erronée peut avoir des conséquences graves sur la sécurité de l'aéronef. Par exemple, un changement de direction de l'aéronef non désiré par le pilote peut avoir des conséquences importantes sur la sécurité de l'aéronef et de son environnement.

Il existe donc un besoin d'obtenir un dispositif électronique de commande d'un système avionique permettant de faciliter les interactions d'un opérateur avec ce système avionique tout en étant suffisamment sûr pour la mise en oeuvre d'une fonction critique avionique.

A cet effet, l'invention a pour objet un dispositif électronique de commande d'un système avionique pour la mise en oeuvre d'une fonction critique avionique, le système avionique étant propre à fonctionner selon un contexte courant défini par au moins un paramètre de fonctionnement associé au système avionique, le dispositif électronique de commande comprenant :
- un module de réception configuré pour recevoir un signal vocal d'instruction capté par un microphone et pour recevoir le contexte courant;
- un module de reconnaissance vocale configuré pour transformer le signal vocal en une retranscription textuelle dudit signal vocal ;
- un module de traitement configuré pour effectuer un traitement de la retranscription textuelle afin d'associer la retranscription textuelle à au moins une action à réaliser destinée au système avionique ;
- un dispositif de surveillance configuré pour recevoir la retranscription textuelle et/ou l'action à réaliser, le dispositif de surveillance comportant :
   + un module de contrôle configuré pour vérifier si la retranscription textuelle et/ou l'action à réaliser est cohérente selon au moins une règle de cohérence prédéterminée, la retranscription textuelle et/ou l'action à réaliser étant considérée comme cohérente selon la règle de cohérence si et seulement si :
      a) la retranscription textuelle et/ou l'action à réaliser est cohérente avec la syntaxe attendue selon une base de données prédéterminée de règles syntaxiques,
      b) la retranscription textuelle et/ou l'action à réaliser est cohérente avec le champ lexical attendu selon une base de données prédéterminée du champ lexical attendu dans le contexte courant du système avionique, et
      c) la retranscription textuelle et/ou l'action à réaliser est cohérente avec le contexte courant du système avionique,
   + un module de génération configuré pour générer une commande associée à l'action à réaliser seulement si aucune incohérence n'est détectée par le module de contrôle.

Suivant d'autres aspects avantageux de l'invention, le dispositif électronique comprend une ou plusieurs des caractéristiques suivantes, prises isolément ou suivant toutes les combinaisons techniquement possibles :
- le dispositif électronique comprend un module de transmission configuré pour transmettre la commande au système avionique pour la mise en œuvre de la fonction critique avionique ;
- le dispositif de électronique comprend en outre un module de validation configuré pour afficher la ou les commandes à destination d'un opérateur du système avionique avant la transmission de la commande au système avionique, le module de validation étant configuré pour recevoir une validation de chaque commande de la part de l'opérateur et pour envoyer la commande au module de transmission uniquement après réception de la validation de la commande par l'opérateur ;
- le dispositif de surveillance comporte en outre un module d'alerte configuré pour générer un signal d'alerte lorsqu'une incohérence est détectée par le module de contrôle ;
- chaque paramètre de fonctionnement associé au système avionique est choisi parmi le groupe consistant en : un paramètre de vol d'un aéronef associé au système avionique ; un plan de vol associé à l'aéronef ; une mission attribuée à l'aéronef ; un paramètre provenant d'au moins un capteur avionique ; un paramètre météorologique associé à l'environnement de l'aéronef; et un paramètre physiologique d'un opérateur du système avionique ;
- le module de traitement comporte un module de traitement automatique des langues configuré pour réaliser au moins un traitement choisi parmi :une lemmatisation de la retranscription textuelle ; une racinisation de la retranscription textuelle ; une reconnaissance de mots-clés et/ou d'entités nommées dans la retranscription textuelle ;
- le module de traitement comprend un module de compréhension du langage naturel configuré pour réaliser au moins un traitement choisi parmi : une reconnaissance de motifs textuels dans la retranscription textuelle ; une association de la retranscription textuelle avec au moins un concept stocké dans une base de données; une utilisation d'un moteur sémantique pour relier des séquences de mots de la retranscription textuelle à au moins un concept; et une application d'un réseau de neurones pour détecter des sentiments et/ou des intentions dans la retranscription textuelle ;
- le dispositif de surveillance comporte en outre un module d'activation configuré pour: activer le module de traitement automatique des langues ; analyser si l'action à réaliser obtenue par le traitement réalisé par le module de traitement automatique des langues permet la génération d'une commande par le module de génération; activer le module de compréhension du langage naturel uniquement si l'action à réaliser ne permet pas la génération d'une commande par le module de génération.

L'invention concerne également un procédé de commande d'un système avionique pour la mise en œuvre d'une fonction critique avionique, le système avionique étant propre à fonctionner selon un contexte courant défini par au moins un paramètre de fonctionnement associé au système avionique, le procédé étant mis en œuvre par un dispositif électronique de commande et comprenant les étapes suivantes
- réception d'un signal vocal d'instruction acquis par un microphone et réception du contexte local ;
- transformation du signal vocal en une retranscription textuelle dudit signal vocal ;
- traitement de la retranscription textuelle afin d'associer la retranscription textuelle à au moins une action à réaliser destinée au système avionique;
- vérification si la retranscription textuelle et/ou l'action à réaliser est cohérente selon au moins une règle de cohérence prédéterminée, la retranscription textuelle et/ou l'action à réaliser étant considérée comme cohérente selon la règle de cohérence si et seulement si :
   a) la retranscription textuelle et/ou l'action à réaliser est cohérente avec la syntaxe attendue selon une base de données prédéterminée de règles syntaxiques,
   b) la retranscription textuelle et/ou l'action à réaliser est cohérente avec le champ lexical attendu selon une base de données prédéterminée du champ lexical attendu dans le contexte courant du système avionique, et
   c) la retranscription textuelle et/ou l'action à réaliser est cohérente avec le contexte courant du système avionique,
- génération d'un signal de commande associé à l'action à réaliser seulement si aucune incohérence n'est détectée.

L'invention a également pour objet un programme d'ordinateur comportant des instructions logicielles qui, lorsqu'elles sont exécutées par un ordinateur, mettent en œuvre un procédé tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un aéronef et d'un poste de contrôle comprenant chacun un dispositif électronique selon l'invention,
- la figure 2 est une représentation schématique du dispositif électronique selon l'invention, et
- la figure 3 est un organigramme d'un procédé, selon l'invention, de commande d'un système avionique pour la mise en œuvre d'une fonction critique avionique par le dispositif électronique.

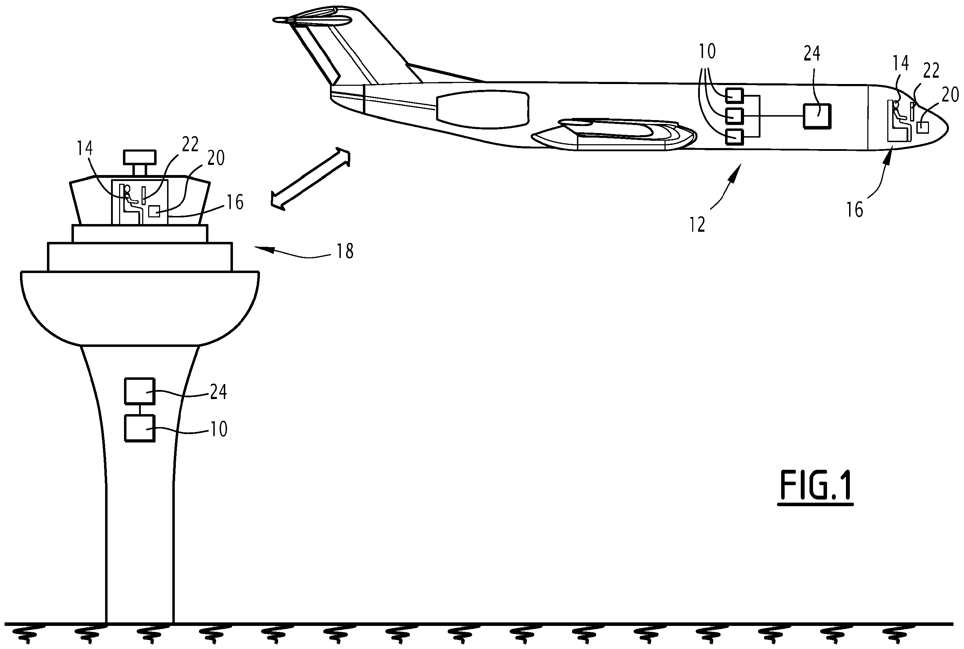

Une pluralité de systèmes électroniques avioniques 10 sont représentés sur la figure 1.

Le système avionique 10 est notamment embarqué dans un aéronef 12. L'aéronef est typiquement un avion, un hélicoptère, ou encore un drone. Autrement dit, l'aéronef 12 est un engin volant pilotable par un opérateur 14, ici un pilote, via un poste de commande 16. Le poste de commande 16 est disposé à l'intérieur de l'aéronef 12 ou bien à distance de l'aéronef 12, notamment dans le cas d'un drone.

En variante, comme représenté également sur la figure 1, le système avionique 10 est embarqué dans un poste de contrôle 18 au sol, comme une tour de contrôle dans un aérodrome par exemple. L'opérateur 14 contrôle le trafic aérien et notamment l'aéronef 12 via le poste de commande 16 disposé dans le poste de contrôle 18.

Comme visible sur la figure 1, le poste de commande 16 comprend notamment un microphone 20 disposé en regard de l'opérateur 14. Le microphone 20 est configuré pour capter un signal vocal émis par l'opérateur 14.

Le poste de commande 16 comprend en outre un écran d'affichage 22. L'écran d'affichage 22 est par exemple un écran d'affichage tête basse. L'écran est alors une surface configurée pour afficher au moins une image. Avantageusement, l'écran d'affichage tête basse est configuré pour afficher des informations relatives à l'aéronef 12, telles que la vitesse, l'altitude, l'orientation de l'aéronef 12 et/ou des informations relatives à l'environnement extérieur de l'aéronef 12, telles que des informations de trafic aérien et des conditions météorologiques aux environs de l'aéronef 12.

En variante, l'écran d'affichage 22 est un écran d'affichage tête haute. L'écran est alors au moins partiellement transparent. Avantageusement, l'écran d'affichage tête haute est une visière intégrée dans un casque propre à être porté par l'opérateur 14. En variante, l'écran d'affichage tête haute est une surface transparente fixée dans le poste de commande 16 et placée devant l'opérateur 14. En variante encore, l'écran d'affichage tête haute est un pare-brise de l'aéronef 12.

Chaque système avionique 10 est en particulier configuré pour mettre en œuvre une fonction critique avionique. La fonction critique avionique est typiquement choisie parmi le groupe consistant en: une commande de vol de l'aéronef 12, un calcul de trajectoire de l'aéronef 12, une communication de l'aéronef 12 avec le poste de contrôle 18, un changement de fréquence de communication de l'aéronef 12, un ordre de régulation du trafic aérien etc.

Toutefois, l'homme du métier comprendra que l'invention s'adapte également à d'autres fonctions critiques, telles qu'à un processus de contrôle d'un réacteur nucléaire, à un contrôle de la température dans un fourneau d'une usine, à une commande de navigation d'un véhicule automobile autonome, à une commande de vitesse d'un véhicule ferroviaire, etc.

Chaque système avionique 10 est propre à fonctionner selon un contexte courant défini par au moins un paramètre de fonctionnement associé audit système avionique 10.

Chaque paramètre de fonctionnement est une donnée caractéristique du contexte courant. Le contexte courant correspond à l'ensemble des circonstances dans lesquelles fonctionne le système avionique 10.

En particulier, chaque paramètre de fonctionnement associé au système avionique 10 est choisi parmi le groupe consistant en :
- un paramètre de vol de l'aéronef 12 associé au système avionique 10 ;
- un plan de vol associé à l'aéronef 12 ;
- une mission attribuée à l'aéronef 12 ;
- un paramètre provenant d'au moins un capteur avionique ;
- un paramètre météorologique associé à l'environnement de l'aéronef 12 ; et
- un paramètre physiologique de l'opérateur 14.

Le paramètre de vol est notamment la position géographique de l'aéronef 12, l'altitude de l'aéronef 12, la vitesse de de l'aéronef 12 ou le cap de l'aéronef 12.

Le plan de vol de l'aéronef 12 comprend notamment un ensemble de points de passages prévus pour l'aéronef 12 entre les aérodromes de départ et de destination.

La mission de l'aéronef 12 est l'objectif du vol de l'aéronef 12, comme par exemple transporter des passagers et/ou des marchandises à une certaine destination, une reconnaissance ou une surveillance une zone d'intérêt, etc.

Le paramètre météorologique est par exemple la vitesse du vent, la présence d'intempérie, la visibilité de l'environnement pour le pilote, etc.

Le paramètre physiologique est par exemple la fréquence cardiaque de l'opérateur 14 ou un paramètre représentatif de l'état de conscience de l'opérateur 14.

Un dispositif électronique de commande 24 de ou des systèmes avioniques 10 pour la mise en œuvre de la fonction critique avionique associée à chaque système avionique 10 est également représenté sur la figure 1.

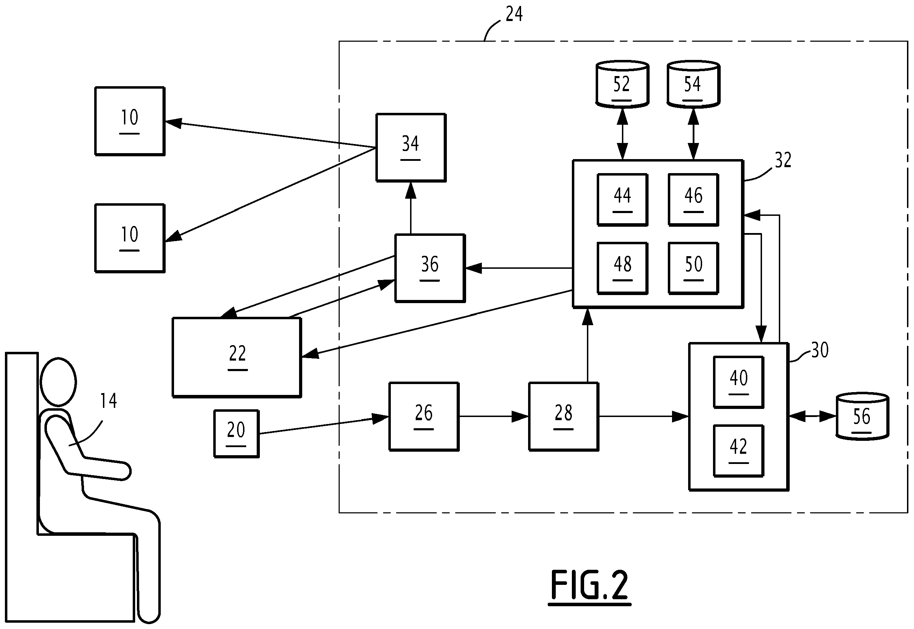

En référence à la figure 2, le dispositif électronique 24 comprend un module de réception 26, un module de reconnaissance vocale 28, un module de traitement 30 et un dispositif de surveillance 32.

Avantageusement, le dispositif électronique 24 comprend en outre un module de transmission 34 et un module de validation 36.

Le module de réception 26 est configuré pour recevoir un signal vocal d'instruction capté par le microphone 20. Le signal vocal d'instruction provient en particulier de l'opérateur 14 dans le poste de commande 16. Le signal vocal d'instruction est un signal analogique ou numérique.

Le signal vocal d'instructions est notamment une commande émise par l'opérateur 14 à base de mots clés ou une demande exprimée en langage naturel, par exemple lors d'un dialogue entre le contrôle aérien et le pilote.

Le module de réception 26 est en outre configuré pour recevoir le contexte courant. En particulier, le module de réception 26 est configuré pour recevoir le ou les paramètres de fonctionnement associé au système avionique 10 et permettant de caractériser le contexte courant. Le module de réception 26 est propre à recevoir par exemple les paramètres de vol par le système de commande de vol ou le plan de vol par le FMS (« Flight Managment System » en anglais ou Système de Gestion de Vol en français).

Le module de reconnaissance vocale 28 est configuré pour recevoir le signal vocal d'instruction de la part du module de réception 26 et pour transformer le signal vocal en une retranscription textuelle du signal vocal.

En particulier, le module de reconnaissance vocale 28 est configuré pour traiter le signal vocal afin de reconnaître les différents mots le constituant. Le module de reconnaissance vocale 28 est propre à fournir en sortie le texte transcrit en un texte ou séquence de mots.

La reconnaissance vocale est par exemple mise en œuvre par une numérisation et une paramétrisation du signal vocal par une technique d'analyse fréquentielle utilisant la transformée de Fourier. En variante, un algorithme d'apprentissage automatique prend directement en entrée le signal vocal sans prétraitement. L'algorithme d'apprentissage automatique réalise une association entre des segments élémentaires du signal vocal et des éléments lexicaux. Cette association fait appel à une modélisation statistique entre autres par modèles de Markov cachés et/ou par réseaux de neurones artificiels. Enfin, un décodage est réalisé en concaténant les modèles élémentaires précédemment appris afin de reconstituer la retranscription textuelle.

Le module de traitement 30 est configuré pour recevoir la retranscription textuelle de la part du module de reconnaissance vocale 28 et pour effectuer un traitement de la retranscription textuelle afin d'associer la retranscription textuelle à au moins une action à réaliser destinée au système avionique 10.

L'action à réaliser comprend notamment une action réalisable par le système avionique 10 et avantageusement une valeur et un ou plusieurs critères. Par exemple, lorsque le système avionique 10 est un système de commande de vol, l'action à réaliser peut-être représentée sous la forme {action = changer l'altitude de l'aéronef, valeur = 10 000 m au-dessus du sol, critère = respecter une vitesse ascensionnelle de sécurité}. A titre d'autre exemple, lorsque le système avionique 10 est un système de communication, l'action à réaliser peut-être représentée sous la forme {action = changer de fréquence, valeur =118.100}. A titre d'autre exemple encore, lorsque le système avionique 10 est un système de calcul de trajectoire, l'action à réaliser peut-être représentée sous la forme {action = calculer distance position courante- aéroport, critère = minimiser la distance}.

Le module de traitement 30 comporte avantageusement un module de traitement automatique des langues 40 et un module de compréhension du langage naturel 42.

Le module de traitement automatique des langues 40 est notamment un composant dit « NLP » (pour « Natural langage processing » en anglais ou « Traitement du langage naturel » en français).

Le module de traitement automatique des langues 40 est configuré pour réaliser au moins un traitement choisi parmi :
- une lemmatisation de la retranscription textuelle ;
- une racinisation de la retranscription textuelle ;
- une reconnaissance de mots-clés et/ou d'entités nommées dans la retranscription textuelle.

A titre d'exemple, si la commande vocale est « Changement de fréquence à 118.100 », le module de traitement automatique des langues 40 est propre à raciniser le mot « changement » en « changer », à reconnaitre les mots-clés « fréquence » et « changer » et reconnaitre l'entité « numéro de fréquence 118.100 ». Ainsi, le module de traitement automatique des langues 40 transforme la commande vocale « Changement de fréquence à 118.100 » en l'action à réaliser {action = changer fréquence, valeur = 118.100}.

Avantageusement, le module de traitement automatique des langues 40 est propre à détecter un mot-clé prédéterminé que l'opérateur 14 indique au début de sa commande vocale afin de signifier au dispositif électronique 24 que la suite du signal vocal est bien une commande vocale destinée au système avionique 10.

Comme cela sera expliqué par la suite, le module de compréhension du langage naturel 42 est propre à opérer en complément du module de traitement automatique des langues 40 lorsque le traitement effectué par le module de traitement automatique des langues 40 est insuffisant pour produire une action à réaliser.

Le module de compréhension du langage naturel 42 est notamment un composant dit « NLU » (pour « Natural langage understanding » en anglais ou « Compréhension du langage naturel » en français).

Le module de compréhension du langage naturel 42 est configuré pour réaliser au moins un traitement choisi parmi :
- une reconnaissance de motifs textuels dans la retranscription textuelle ;
- une association de la retranscription textuelle avec au moins un concept stocké dans une base de données 56;
- une utilisation d'un moteur sémantique pour relier des séquences de mots de la retranscription textuelle à au moins un concept; et
- une application d'un réseau de neurones pour détecter des sentiments et/ou des intentions dans la retranscription textuelle.

A titre d'exemple, si la commande vocale est « Trouve moi l'aéroport le plus proche », le module de traitement automatique des langues 40 effectue une racination de « trouve » en « trouver » et détecte les mots-clés « trouver » et « aéroport ». Ce traitement est ici insuffisant pour obtenir une action à réaliser. Le module de compréhension du langage naturel 42 récupère alors les mots-clés « trouver » et « aéroport » puis extrait des mots « trouver aéroport » le concept de « calculer distance position courante à un aéroport » à l'aide d'un tableau contenant cette association. Puis, il extrait des mots « le plus proche » le concept de « minimiser la distance ». Ainsi, le module de compréhension du langage naturel 42 est propre à fournir l'action à réaliser suivante : {action = calculer distance position courante- aéroport, critère= minimiser la distance}.

Lorsque, suite au traitement par le module de compréhension du langage naturel 42, il demeure une incertitude sur l'action à réaliser, le module de traitement 30 est propre à générer plusieurs actions à réaliser associées. Comme cela sera décrit par la suite, l'opérateur 14 peut alors choisir la commande correspondante à sa commande vocale.

Le dispositif de surveillance 32 est configuré pour recevoir la retranscription textuelle et/ou l'action à réaliser.

Ainsi, dans un mode de réalisation, le dispositif de surveillance 32 est configuré pour recevoir uniquement la retranscription textuelle.

En variante, le dispositif de surveillance 32 est configuré pour recevoir uniquement l'action à réaliser.

En variante encore, le dispositif de surveillance 32 est configuré pour recevoir la retranscription textuelle et l'action à réaliser.

Le dispositif de surveillance 32 est configuré pour vérifier que l'action à réaliser est valide. A cet effet, le dispositif de surveillance 32 comporte un module de contrôle 44, un module de génération 46 et avantageusement un module d'alerte 48 et un module d'activation 50.

Le module de contrôle 44 est configuré pour vérifier si la retranscription textuelle et/ou l'action à réaliser est cohérente selon au moins une règle de cohérence prédéterminée.

Ainsi, lorsque le dispositif de surveillance 32 reçoit uniquement la retranscription textuelle, le module de contrôle 44 vérifie uniquement la retranscription textuelle. Lorsque le dispositif de surveillance 32 reçoit uniquement l'action à réaliser, le module de contrôle 44 vérifie uniquement l'action à réaliser. Lorsque le dispositif de surveillance 32 reçoit la retranscription textuelle et l'action à réaliser, le module de contrôle 44 vérifie à la fois la retranscription textuelle et l'action à réaliser.

La retranscription textuelle et/ou l'action à réaliser est considérée comme cohérente selon la règle de cohérence si et seulement si :
a) la retranscription textuelle et/ou l'action à réaliser est cohérente avec la syntaxe attendue selon une base de données 52 prédéterminée de règles syntaxiques,
b) la retranscription textuelle et/ou l'action à réaliser est cohérente avec le champ lexical attendu selon une base de données 54 prédéterminée du champ lexical attendu dans le contexte courant du système avionique 10, et
c) la retranscription textuelle et/ou l'action à réaliser est cohérente avec le contexte courant du système avionique 10,

La base de données 52 prédéterminée de règles syntaxiques comprend en particulier des règles orthographiques et de grammaire relatif à la langue utilisée par l'opérateur 14 permettant de définir si une phrase est correcte d'un point de vue syntaxique.

Le dispositif de surveillance 32 comprend avantageusement un module linguistique configuré pour détecter dans quelle langue communique l'opérateur et activer la base de données de règles syntaxiques correspondante. En variante, l'opérateur 14 indique dans quelle langue il communique avec le dispositif électronique 24. En variante encore, la langue est prédéterminée.

La base de données 54 prédéterminée du champ lexical attendu comprend pour les différents contextes courants rencontrés par le système avionique 10, un champ lexical associé. Par exemple, cette base de donnée 54 comprend un champ lexical associé au décollage, un champ lexical associé au vol, un champ lexical associé aux missions tactiques, etc.

Le module de contrôle 44 est propre à vérifier si la retranscription textuelle et/ou l'action à réaliser est cohérente avec le contexte courant du système avionique 10, en comparant les paramètres de fonctionnement du contexte courant avec les paramètres de fonctionnement qu'entrainerait la commande. En particulier, un écart supérieur à un seuil prédéterminé indique une incohérence. Par exemple, une commande de vol entrainant une chute très importante d'altitude est incohérente avec un contexte local de vol de croisière.

Le module de contrôle 44 est configuré pour vérifier que l'action à réaliser est réaliste, réalisable et cohérente avec le contexte.

A titre d'exemple, dans le cadre du vol d'un aéronef 12 en train de voler au-dessus de l'océan Atlantique, la retranscription textuelle « New York vers Naviguer » n'est pas valide du point de vue des règles syntaxiques. Toujours dans ce même cadre, la retranscription textuelle « Rouler sur niveau de vol FL300 » n'est pas valide du point de vue du champ lexical du vol. En effet, le terme de « rouler » ne fait pas partie du champ lexical du vol. Encore dans ce même cadre, l'action à réaliser {action = changer de destination, valeur = Tokyo} n'est pas cohérente avec le contexte d'un vol au-dessus de l'océan atlantique. En particulier, le module de contrôle 44 détecte que la distance entre l'aéronef 12 et la nouvelle destination est trop élevée.

Le module de génération 46 est configuré pour générer une commande associée à l'action à réaliser seulement si aucune incohérence n'est détectée par le module de contrôle 44. Autrement dit, le module de génération 46 est configuré pour générer la commande l'action à réaliser seulement si les trois conditions selon la règle de cohérence a), b) et c) sont respectées.

Le module d'alerte 48 est configuré pour générer un signal d'alerte lorsqu'une incohérence est détectée par le module de contrôle 44.

Avantageusement, le module d'alerte 48 est configuré pour envoyer le signal d'alerte à l'écran d'affichage 22 afin que l'opérateur 14 puisse être informé de l'alerte et émettre un nouveau signal de commande corrigé à destination du système avionique 10.

Le module d'activation 50 est configuré pour activer le module de traitement automatique des langues 40.

En particulier, le module d'activation 50 est configuré pour activer le module de traitement automatique des langues 40 lorsque le module de réception 26 reçoit un signal vocal ou que le module de traitement 30 reçoit la retranscription textuelle.

Le module d'activation 50 est en outre configuré pour analyser si l'action à réaliser obtenue par le traitement réalisé par le module de traitement automatique des langues 40 permet la génération d'une commande par le module de génération 46.

En particulier, le module d'activation 50 analyse si le module de génération 46 est capable de générer une action, une valeur et/ou un critère afin de définir de manière complète la commande à destination du système avionique 10.

En reprenant les exemples ci-dessus, si la commande vocale est « Changement de fréquence à 118.100 », le module de traitement automatique des langues 40 transforme cette commande vocale en l'action à réaliser {action = changer fréquence, valeur = 118.100}. Le module de génération 46 est alors propre à générer la commande associée de manière claire et complète.

A l'inverse, si la commande vocale est « Trouve moi l'aéroport le plus proche », le module de traitement automatique des langues 40 détecte les mots-clés « trouver » et « aéroport ». Toutefois, ce traitement est ici insuffisant pour obtenir une action à réaliser car le module de génération 46 est incapable de définir le critère associé à la recherche de l'aéroport.

A cet effet, le module d'activation 50 est configuré pour activer le module de compréhension du langage naturel 42 uniquement si l'action à réaliser ne permet pas la génération d'une commande par le module de génération 46.

Dans l'exemple ci-dessus, l'activation du module de compréhension du langage naturel 42 permet de détecter le concept de « calculer distance position courante à un aéroport ». Ainsi, le module de compréhension du langage naturel 42 est propre à fournir l'action à réaliser suivante : {action = calculer distance position courante- aéroport, critère= minimiser la distance} et le module de génération 46 est propre à générer

Le module de transmission 34 est configuré pour transmettre la commande au système avionique 10 correspondant pour la mise en œuvre de la fonction critique avionique.

Le module de transmission 34 est ainsi configuré pour analyser la commande et l'envoyer au système avionique 10 correspondant à la dite commande.

Le module de validation 36 est configuré pour afficher la commande à destination de l'opérateur 14 du système avionique 10 avant la transmission de la commande au système avionique. En particulier, le module de validation 36 est configuré pour afficher la commande sur l'écran d'affichage 22 devant l'opérateur 14.

Lorsque plusieurs commandes sont générées par le module de génération 48, le module de validation 36 est configuré pour afficher les différentes commandes.

Le module de validation 36 est configuré pour recevoir une validation de chaque commande de la part de l'opérateur 14 et pour envoyer la commande au module de transmission 34 uniquement après réception de la validation de la commande par l'opérateur 14.

Par exemple, lorsque la commande est affichée sur l'écran d'affichage 22, le module de validation 36 est propre à afficher un bouton de validation et/ou un bouton de refus de transmission de la commande au système avionique 10.

Lorsque plusieurs commandes sont affichées, le module de validation 36 est propre à afficher un bouton de validation à côté de chaque commande afin de la valider ou non.

Dans l'exemple de la figure 2, le dispositif électronique 24 comprend une unité de traitement d'informations formée par exemple d'une mémoire et d'un processeur associé à la mémoire. Le module de réception 26, le module de reconnaissance vocale 28, le module de traitement 30, le dispositif de surveillance 32 et en complément facultatif, le module de transmission 34 et le module de validation 36 sont réalisés chacun sous forme d'un logiciel, ou d'une brique logicielle, exécutables par le processeur. La mémoire est alors apte à stocker un logiciel de réception, un logiciel de reconnaissance vocale, un logiciel de traitement, un logiciel de surveillance et en complément facultatif, un logiciel de transmission et un logiciel de validation. Le processeur est alors apte à exécuter chacun de ces logiciels.

En variante non représentée, le module de réception 26, le module de reconnaissance vocale 28, le module de traitement 30, le dispositif de surveillance 32 et en complément facultatif, le module de transmission 34 et le module de validation 36, sont réalisés chacun sous forme d'un composant logique programmable, tel qu'un FPGA (de l'anglais *Field Programmable Gate Array*)*,* ou encore sous forme d'un circuit intégré dédié, tel qu'un ASIC (de l'anglais *Application Specific Integrated Circuit*)*.*

Lorsque le dispositif électronique 24 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comportant des instructions logicielles.

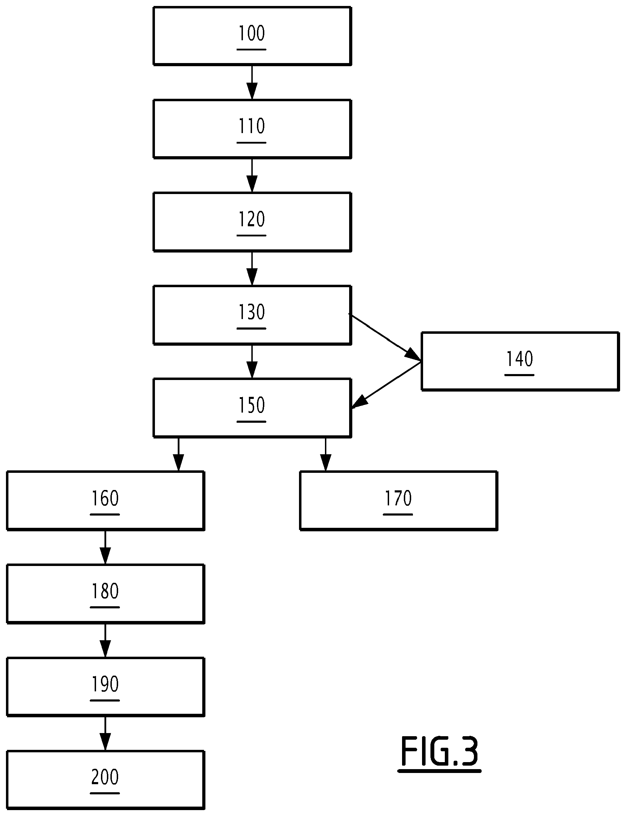

Le fonctionnement du dispositif électronique 24 de commande selon l'invention va désormais être expliqué à l'aide de la figure 3 représentant un organigramme du procédé, selon l'invention, de commande d'un système avionique 10 pour la mise en œuvre d'une fonction critique avionique.

Initialement, un opérateur 14 est installé dans le poste de commande 16.

Le poste de commande 16 est installé dans un aéronef 12 ou au sol, par exemple dans un poste de contrôle 18, comme représenté sur la figure 1.

L'opérateur 14 émet alors une instruction vocale à destination d'un système avionique 10 pour la mise en œuvre d'une fonction critique avionique.

A titre d'exemple qui sera développé par la suite, l'instruction vocale émise par l'opérateur 14 dans l'aéronef 12, par exemple le pilote, est par exemple « Assistant, peux-tu régler VHF1 sur cent vingt six ?».

Lors d'une étape initiale 100, le module de réception 26 réceptionne le signal vocal d'instruction acquis par le microphone 20 disposé dans le poste de commande 16 en regard de l'opérateur.

Le module de réception 26 réceptionne également le contexte local. Par exemple, le module de réception 26 réceptionne la position géographique et la vitesse de l'aéronef 12, les conditions météorologiques de l'environnement de l'aéronef 12, l'état de conscience de l'opérateur 14, etc.

Puis, lors d'une étape 110, le module de reconnaissance vocale 28 reçoit le signal vocal d'instruction de la part du module de réception 26 et transforme le signal vocal en une retranscription textuelle du signal vocal.

Lors d'une étape optionnelle 120, le module d'activation 50 active alors le module de traitement 30 et en particulier le module de traitement automatique des langues 40 après que le module de réception 26 ait reçu le signal vocal ou que le module de traitement 30 ait reçu la retranscription textuelle.

Puis, lors d'une étape 130, le module de traitement 30 reçoit la retranscription textuelle de la part du module de reconnaissance vocale 28 et effectue un traitement de la retranscription textuelle afin d'associer la retranscription textuelle à au moins une action à réaliser destinée au système avionique 10.

En particulier, le module de traitement automatique des langues 40 réalise au moins un traitement choisi parmi :
- une lemmatisation de la retranscription textuelle ;
- une racinisation de la retranscription textuelle ;
- une reconnaissance de mots-clés et/ou d'entités nommées dans la retranscription textuelle.

Dans le cas de l'exemple cité ci-dessus, le module de traitement automatique des langues 40 effectue un traitement de la commande « Assistant, peux-tu régler VHF1 sur cent vingt six ?» et détecte les mots-clés « assistant », « VHF1 » « régler » « cent vingt six ». Toutefois, ce traitement est insuffisant pour obtenir une action à réaliser. Le module de traitement automatique des langues 40 détecte ainsi le mot-clé « assistant » et comprend que la suite de la commande vocale est une commande à traiter.

Lors d'une étape optionnelle 140, le module d'activation 50 active le module de compréhension du langage naturel 42 uniquement si l'action à réaliser ne permet pas la génération d'une commande par le module de génération 46.

Toujours dans le même exemple, le module de compréhension du langage naturel 42 détecte l'action « régler » et détecte que « VHF1 » est une radio parmi une liste de radios à disposition pour l'action « régler ». Le module de compréhension du langage naturel 42 interroge le système avionique 10 associé, ici le RMS (pour « Radio Management System » en anglais ou « Système de Gestion Radio » en français), les fréquences disponibles à partir de « cent vingt six ». Le RMS répond avec les fréquences qu'il connait au regard notamment de ce que l'opérateur 14 a énoncé, en fonction de la position de l'aéronef 12 actuelle et envisagée, de la portée possible de la fréquence radio, etc. Le module de compréhension du langage naturel 42 détecte alors que les fréquences « 126.0 MHz» et « 120.6 MHz» sont possibles. Le module de traitement 30 associe alors à la retranscription textuelle les deux actions à réaliser {action= régler fréquence de la radio VHF1, valeur=126.0} et {action= régler fréquence de la radio VHF1, valeur=120.6}.

Puis, lors de l'étape 150, le module de contrôle 44 vérifie si la retranscription textuelle et/ou l'action à réaliser est cohérente selon au moins une règle de cohérence, en particulier si les trois conditions selon la règle de cohérence a), b) et c) listées ci-dessus sont respectées.

Dans le cadre de l'exemple, le module de contrôle 44 vérifie la cohérence de la retranscription textuelle « Assistant, peux-tu régler VHF1 sur cent vingt six ?» et/ou des actions à réaliser {action= régler fréquence de la radio VHF1, valeur=126.0} et {action= régler fréquence de la radio VHF1, valeur=120.6}. Ici, le module de contrôle 44 ne détecte pas d'incohérence.

Si aucune incohérence n'est détectée, le module de 48 génère alors un signal de commande associé à l'action à réaliser lors d'une étape 160.

Lorsqu'une incohérence est détectée par le module de contrôle 44, le module d'alerte 48 génère un signal d'alerte lors d'une étape 170. En particulier, le module d'alerte 48 envoie le signal d'alerte à l'écran d'affichage 22 afin que l'opérateur 14 puisse être informé de l'alerte.

Après l'étape 160, lors d'une étape 180, le module de validation 36 reçoit chaque commande avant la transmission au module de transmission 34.

Le module de validation 36 affiche alors la commande sur l'écran d'affichage 22 devant l'opérateur 14. Lorsque plusieurs commandes sont générées par le module de génération 48, le module de validation 36 affiches les différentes commandes.

Dans l'exemple, le module de validation 36 affiche par exemple sur l'écran d'affichage 22 «Régler VHF1 sur 126.0 MHz» et «Régler VHF1 sur 120.6 MHz». L'opérateur 14 peut alors valider la commande qu'il désire, à savoir ici « Régler VHF1 sur 120.6 MHz ».

Lors d'une étape 190, le module de validation 36 reçoit la validation de chaque commande de la part de l'opérateur 14 et envoie la commande au module de transmission 34 uniquement après réception de la validation de la commande par l'opérateur 14.

Puis lors d'une étape 200, le module de transmission 34 transmet la commande au système avionique 10 correspondant pour la mise en œuvre de la fonction critique avionique. En particulier, le module de transmission 34 analyse la commande et l'envoi au système avionique 10 correspondant à la dite commande.

Dans le cadre de l'exemple, le module de transmission 34 détecte que les commandes associées aux actions à réaliser {action= régler fréquence de la radio VHF1, valeur=126.0} et {action= régler fréquence de la radio VHF1, valeur=120.6} sont destinées au RMS.

Le système avionique 10 reçoit alors la commande et met en œuvre la fonction critique avionique.

Par exemple, le RMS change la fréquence de la radio VHF1 sur la fréquence 120.6 Mhz.

On conçoit alors que la présente invention présente un certain nombre d'avantages.

En effet, le dispositif de surveillance 32 permet de vérifier que la commande générée par le module de traitement 30 est cohérente d'un point de vue syntaxique, d'un point de vue sémantique et au vu du contexte courant, c'est-à-dire que la commande est réaliste et réalisable par le système avionique 10 dans le contexte courant.

L'invention permet d'alerter l'opérateur 14 en cas de détection d'une commande incohérente et ainsi le système avionique 10 critique ne réalise pas la commande incohérente qui pourrait avoir des éventuelles conséquences graves sur la sécurité de l'aéronef 12 et de son environnement.

Ainsi, l'invention permet de simplifier la communication de l'opérateur 14 avec les différents systèmes avioniques 10 tout en permettant une sécurité importante pour la mise en œuvre d'une fonction critique avionique.

Cette simplification et cette validation des commandes permet de réduire la charge mentale de l'opérateur 14 qui est alors plus à même de gérer les différentes situations complexes qu'il rencontre lors du vol ou du contrôle de l'aéronef 12.

Ainsi, l'invention permet une amélioration à la fois du confort de l'opérateur 14 et de la sécurité, notamment au regard des exigences importantes de sécurité dans le domaine avionique.

## Revendications

1. Dispositif électronique de commande (24) d'un système avionique pour la mise en œuvre d'une fonction critique avionique, le système avionique (10) étant propre à fonctionner selon un contexte courant défini par au moins un paramètre de fonctionnement associé au système avionique (10), le dispositif électronique de commande (24) comprenant :
- un module de réception (26) configuré pour recevoir un signal vocal d'instruction capté par un microphone (20) et pour recevoir le contexte courant;
- un module de reconnaissance vocale (28) configuré pour transformer le signal vocal en une retranscription textuelle dudit signal vocal ;
- un module de traitement (30) configuré pour effectuer un traitement de la retranscription textuelle afin d'associer la retranscription textuelle à au moins une action à réaliser destinée au système avionique ;
- un dispositif de surveillance (32) configuré pour recevoir la retranscription textuelle et/ou l'action à réaliser, le dispositif de surveillance (32) comportant :
+ un module de contrôle (44) configuré pour vérifier si la retranscription textuelle et/ou l'action à réaliser est cohérente selon au moins une règle de cohérence prédéterminée, la retranscription textuelle et/ou l'action à réaliser étant considérée comme cohérente selon la règle de cohérence si et seulement si :
a) la retranscription textuelle et/ou l'action à réaliser est cohérente avec la syntaxe attendue selon une base de données prédéterminée de règles syntaxiques (52),
b) la retranscription textuelle et/ou l'action à réaliser est cohérente avec le champ lexical attendu selon une base de données prédéterminée du champ lexical (54) attendu dans le contexte courant du système avionique (10), et
c) la retranscription textuelle et/ou l'action à réaliser est cohérente avec le contexte courant du système avionique (10),
+ un module de génération (48) configuré pour générer une commande associée à l'action à réaliser seulement si aucune incohérence n'est détectée par le module de contrôle (44).

2. Dispositif électronique (24) selon la revendication 1, dans lequel le dispositif électronique (24) comprend un module de transmission (34) configuré pour transmettre la commande au système avionique (10) pour la mise en œuvre de la fonction critique avionique.

3. Dispositif électronique (24) selon la revendication 2, dans lequel le dispositif de électronique (24) comprend en outre un module de validation (36) configuré pour afficher la ou les commandes à destination d'un opérateur (14) du système avionique (10) avant la transmission de la commande au système avionique (10), le module de validation (36) étant configuré pour recevoir une validation de chaque commande de la part de l'opérateur (14) et pour envoyer la commande au module de transmission (36) uniquement après réception de la validation de la commande par l'opérateur (14).

4. Dispositif électronique (24) selon l'une quelconque des revendications précédentes, dans lequel le dispositif de surveillance (32) comporte en outre un module d'alerte (48) configuré pour générer un signal d'alerte lorsqu'une incohérence est détectée par le module de contrôle (44).

5. Dispositif électronique (24) selon l'une quelconque des revendications précédentes, dans lequel chaque paramètre de fonctionnement associé au système avionique (10) est choisi parmi le groupe consistant en :
- un paramètre de vol d'un aéronef (12) associé au système avionique (10) ;
- un plan de vol associé à l'aéronef (12) ;
- une mission attribuée à l'aéronef (12) ;
- un paramètre provenant d'au moins un capteur avionique ;
- un paramètre météorologique associé à l'environnement de l'aéronef (12); et
- un paramètre physiologique d'un opérateur (14) du système avionique (10).

6. Dispositif électronique (24) selon l'une quelconque des revendications précédentes, dans lequel le module de traitement (30) comporte un module de traitement automatique des langues (40) configuré pour réaliser au moins un traitement choisi parmi :
- une lemmatisation de la retranscription textuelle ;
- une racinisation de la retranscription textuelle ;
- une reconnaissance de mots-clés et/ou d'entités nommées dans la retranscription textuelle.

7. Dispositif électronique (24) selon l'une quelconque des revendications précédentes, dans lequel le module de traitement (30) comprend un module de compréhension du langage naturel (42) configuré pour réaliser au moins un traitement choisi parmi :
- une reconnaissance de motifs textuels dans la retranscription textuelle ;
- une association de la retranscription textuelle avec au moins un concept stocké dans une base de données (56);
- une utilisation d'un moteur sémantique pour relier des séquences de mots de la retranscription textuelle à au moins un concept; et
- une application d'un réseau de neurones pour détecter des sentiments et/ou des intentions dans la retranscription textuelle.

8. Dispositif électronique (24) selon les revendications 5 et 6, dans lequel le dispositif de surveillance (32) comporte en outre un module d'activation (50) configuré pour :
- activer le module de traitement automatique des langues (40) ;
- analyser si l'action à réaliser obtenue par le traitement réalisé par le module de traitement automatique des langues (40) permet la génération d'une commande par le module de génération (46);
- activer le module de compréhension du langage naturel (42) uniquement si l'action à réaliser ne permet pas la génération d'une commande par le module de génération (46).

9. Procédé de commande d'un système avionique (10) pour la mise en œuvre d'une fonction critique avionique, le système avionique (10) étant propre à fonctionner selon un contexte courant défini par au moins un paramètre de fonctionnement associé au système avionique (10), le procédé étant mis en œuvre par un dispositif électronique de commande (24) et comprenant les étapes suivantes
- réception (100) d'un signal vocal d'instruction acquis par un microphone et réception du contexte local ;
- transformation (110) du signal vocal en une retranscription textuelle dudit signal vocal ;
- traitement (130) de la retranscription textuelle afin d'associer la retranscription textuelle à au moins une action à réaliser destinée au système avionique;
- vérification (150) si la retranscription textuelle et/ou l'action à réaliser est cohérente selon au moins une règle de cohérence prédéterminée, la retranscription textuelle et/ou l'action à réaliser étant considérée comme cohérente selon la règle de cohérence si et seulement si :
a) la retranscription textuelle et/ou l'action à réaliser est cohérente avec la syntaxe attendue selon une base de données prédéterminée de règles syntaxiques,
b) la retranscription textuelle et/ou l'action à réaliser est cohérente avec le champ lexical attendu selon une base de données prédéterminée du champ lexical attendu dans le contexte courant du système avionique, et
c) la retranscription textuelle et/ou l'action à réaliser est cohérente avec le contexte courant du système avionique,
- génération (160) d'un signal de commande associé à l'action à réaliser seulement si aucune incohérence n'est détectée.

10. Programme d'ordinateur comportant des instructions logicielles qui, lorsqu'elles sont exécutées par un ordinateur, mettent en œuvre un procédé selon la revendication précédente.
